# EUROPÄISCHE PATENTSCHRIFT

(11) **EP 3 695 124 B1**
(45) Veröffentlichungstag und Bekanntmachung des Hinweises auf die Patenterteilung: **21.01.2026**
(21) Anmeldenummer: 18785565.5
(22) Anmeldetag: 05.10.2018
(51) Int. Cl.: F15B 21/044, F15B 21/047, F15B 1/26, B01D 19/00, F15B 11/036, F15B 15/18

(54) **ELEKTROHYDRAULISCHES SYSTEM MIT EINER HYDRAULISCHEN ACHSE UND MINDESTENS EINEM ABGESCHLOSSENEN HYDRAULIKKREISLAUF**
ELECTRO-HYDRAULIC SYSTEM WITH A HYDRAULIC SPINDLE AND AT LEAST ONE ENCLOSED HYDRAULIC CIRCUIT
SYSTEME ELECTRO-HYDRAULIQUE POURVU D'UN AXE HYDRAULIQUE ET D'AU MOINS UN CIRCUIT HYDRAULIQUE ENFERMÉ

(30) Priorität: 11.10.2017 DE 102017218157; 25.10.2017 DE 102017219084
(43) Veröffentlichungstag der Anmeldung: 19.08.2020
(73) Patentinhaber: Robert Bosch GmbH, 70442 Stuttgart (DE)
(72) Erfinder: SCHOBER, Stefan, 4020 Linz (AT); HENDRIX, Gottfried, 97737 Gemuenden (DE)
(86) Internationale Anmeldenummer: PCT/EP2018/077145
(87) Internationale Veröffentlichungsnummer: WO 2019/072715

(56) Entgegenhaltungen:
- EP-A1- 3 101 281
- DE-A1- 102015 213 695
- DE-T2- 69 429 458
- US-A1- 2015 247 511

## Beschreibung

Die Erfindung betrifft ein elektrohydraulisches System mit einer hydraulisch betätigbaren Achse und mindestens einem abgeschlossenen Hydraulikkreislauf, umfassend hydraulische Steuerungsmittel, die in dem abgeschlossenen Hydraulikkreislauf mit einer Hydromaschine, mit einem hydraulischen Verbraucher und mit einem Hydraulikreservoir verbunden sind.

Solche elektrohydraulischen Systeme mit einer hydraulischen Achse können bei einer Vielzahl industrieller Automatisierungsanwendungen zum Einsatz kommen, z. B. bei Pressen, Kunststoffmaschinen, Biegemaschinen.

Solcher Art hydraulische Anordnungen werden auch bevorzugt dazu genutzt, um unter Wasser in Wassertiefen bis zu mehreren Tausend Metern im Zusammenhang mit der Förderung von Erdöl und Erdgas, im Bergbau, naturwissenschaftlichen Erkundungen oder Infrastrukturprojekten ein Element zu bewegen oder ein System mit Fluid nachzufüllen bzw. das Fluid zu wechseln. So befinden sich z. B. bei Erdöl- oder Erdgasförderanlagen auf See in großen Tiefen Prozessventile, mit denen der Volumenstrom des zu fördernden Mediums geregelt oder abgesperrt werden kann.

DE 10 2015 213695 A offenbart ein solches elektrohydraulisches System.

Eine hydraulische Anordnung mit einem elektrohydraulischen Stellantrieb für den Einsatz unter Wasser kann einen Behälter umfassen, in dessen Innenraum eine zumindest als Pumpe betreibbare hydrostatische Maschine und eine mit der hydrostatischen Maschine mechanisch gekoppelte Elektromaschine angeordnet sind. Der Hauptantrieb des Stellantriebs erfolgt dabei über einen elektrischen Motor, der die Pumpe antreibt und so einen hydraulischen Zylinder mit einer geradlinigen Bewegung verstellt. Der Stellantrieb verstellt z. B. große Produktionsarmaturen von Öl- oder Gasbohrlöchern, die die Fördermenge regeln. Der Innenraum des Behälters ist mit einem hydraulischen Druckfluid, z. B. einem Öl, als Arbeitsmittel gefüllt. Der Behälter ist zum umgebenden Seewasserbereich abgeschlossen und gegenüber dem unter Wasser herrschenden Umgebungsdruck druckkompensiert. Das elektrohydraulische System umfasst einen Hydrozylinder, dessen Zylindergehäuse am Gehäuse eines Prozessventils sitzt, und der einen Kolben und eine einseitig vom Kolben wegragende Kolbenstange umfasst, über die ein Prozessventilschieber des Prozessventils bewegt werden kann. Der Kolben teilt das Innere des Zylindergehäuses in einen kolbenstangenabseitigen Zylinderraum und einen kolbenstangenseitigen Zylinderraum auf. Im kolbenstangenseitigen Zylinderraum ist eine mechanische Federanordnung, z. B. Schraubendruckfeder, untergebracht, die den Kolben im Sinne eines Schließprozessventils beaufschlagt. Beim Ein- und Ausfahren eines solchen Differentialzylinders wird normalerweise Öl verdrängt oder benötigt, das dem Volumen der Zylinderstange entspricht. Ein Nachteil dieser Anordnung besteht darin, dass die große Menge an Druckfluid im Innenraum des Behälters Leckverlusten unterliegen kann, die ausgeglichen werden müssen. Außerdem ist für die Kompression des Hydrozylinders eine große Menge an Druckfluid vorzuhalten. Schließlich stört, dass jeder Maschinenzyklus auch einen Spannungszyklus in Bezug auf die Membran eines Druckkompensators bildet, was die Betriebsdauer für langjährige Anwendungen unter Wasser erheblich beeinträchtigt.

Hiervon ausgehend ist es Aufgabe der vorliegenden Erfindung, ein elektrohydraulisches System und ein Verfahren zu schaffen, die die genannten Nachteile lindern oder sogar vermeiden. Insbesondere soll auf konstruktiv einfache Weise die Menge an Druckfluid für den hydraulischen Verbraucher reduziert und in dem Behälter des Stellantriebs möglichst wenig Pendelvolumen erzeugt werden. Weiterhin soll die Betriebsdauer signifikant gesteigert werden.

Diese Aufgaben werden gelöst mit einem elektrohydraulischen System und mit einem Verfahren gemäß den unabhängigen Patentansprüchen. Weitere Ausgestaltungen der Erfindung sind in den abhängigen Patentansprüchen angegeben. Es ist darauf hinzuweisen, dass die Beschreibung, insbesondere im Zusammenhang mit den Figuren, weitere Weiterbildungen der Erfindung anführen.

Hierzu trägt ein elektrohydraulisches System mit einem hydraulischen Verbraucher und mindestens einem abgeschlossenen Hydraulikkreislauf bei, wobei der Hydraulikkreislauf mindestens ein Steuerungsmittel, eine Hydromaschine und ein abgeschlossenes Hydraulikreservoir umfasst. Der abgeschlossene Hydraulikkreislauf ist dabei mit entgastem Hydraulikfluid befüllt.

Ein hydraulischer Verbraucher kann beispielsweise eine bewegliche (Stell)-Achse, ein Antrieb, ein Ventilschieber oder dergleichen sein. Unter einer hydraulisch betätigbaren (Stell- )Achse wird insbesondre ein hydraulischer Aktor, z. B. ein Hydrozylinder sowie die den Aktor mit Fluid ansteuernde hydraulische bzw. elektro-hydraulische Steuerungsanordnung bzw. Schaltung, verstanden. Solche hydraulischen Achsen sind kompakte und leistungsstarke Antriebe. Diese können bei einer Vielzahl industrieller Automatisierungsanwendungen zum Einsatz kommen.

Geschlossene Hydraulikkreisläufe können mit Volumenstromquellen (Hydropumpen) betrieben werden. Geschlossene Hydraulikkreisläufe erfordern im Allgemeinen Anlagen mit Hydromotoren, bei denen der zurückfließende Volumenstrom gleich dem zufließenden Volumenstrom ist. Das sind Arbeitszylinder mit Kolbenflächen oder Rotationsmotoren mit drehender Abtriebsbewegung. Die Druckflüssigkeit bleibt im Hydraulikkreislauf. Die hydraulischen Steuerungsmittel umfassen insbesondere Hydroventile. Die Hydromaschine (Fluidstromerzeuger) ist insbesondere eine Hydropumpe. Das Hydraulikreservoir kann ein Hydrospeicher, eine Nachfüllstation, ein geschlossener Fluidbehälter oder dergleichen sein. Das Hydraulikreservoir kann auch durch die Innenräume des Hydraulikkreislaufs gebildet sein, die im Wesentlichen die Hydromaschine, den Hydromotor und/oder die Hydroleistungen umfassen. Der geschlossene Hydraulikkreislauf ist hierbei (soweit technisch machbar) vollständig mit (einem einzigen) Hydraulikfluid gefüllt. Hierfür kann der Hydraulikkreislauf sogar mit diesem Hydraulikfluid gespült oder zuvor mit einer Vakuumpumpe abgesaugt worden sein, um darin (zuvor befindliche) Luftblasen weitgehend oder vollständig zu entfernen.

Als "entgast" kann ein (flüssiges) Hydraulikfluid angesehen werden, wenn kaum oder keine freie Luft mehr in der Flüssigkeit enthalten ist. Der verbleibende Luftanteil bei einem Mineralöl kann so auf z. B. maximal 8 % bis 9 % begrenzt sein. Zudem können Maßnahmen und/oder Flüssigkeiten eingesetzt werden, so dass im entgasten Zustand der freie Luftanteil bzw. restliche Gasgehalt sogar bis auf 2,0 % oder sogar 0 % sinken kann. Als Indikator für den Luftanteil bzw. Luftgehalt des Fluides kann der Partialdruck in der Flüssigkeit gemessen werden. Beispielhaft wird bei einem Hydraulikfluid HLP 46 der Partialdruck auf ein Niveau von 0 mbar [Millibar] bis max. 180 mbar abgesenkt. Der konkret einzustellende Partialdruck anwendungsspezifisch empirisch ermittelt werden und sich in diesem Bereich bewegen. Die Messung des Partialdruckes kann bei einer Referenz-Fluidtemperatur von z.B. 50°C oder bei Rautemperatur 20°C erfolgen.

Das vorgeschlagene elektrohydraulische System ist eingerichtet zum Betrieb in großer Tiefe unter Wasser. Es handelt sich bei dem elektrohydraulischen System um eines zum Betrieb unter Wasser bei äußeren Umgebungsdrücken oberhalb 100 bar oder sogar oberhalb 250 bar.

Der Behälter des elektrohydraulisches Systems ist gegenüber dem unter Wasser herrschenden Umgebungsdruck druckkompensiert. Dazu ist bei einem Druckkompensator in einer Öffnung in der Behälterwand eine Membran dicht eingeklemmt. Durch die Membran ist also der Innenraum gegen die Umgebung abgeschottet.

Gemäß der hier vorgestellten Anordnung wird bzw. ist eine hydraulische Achse für die Verwendung unter Wasser bzw. in der Tiefsee oder eine andere abgeschlossene hydraulische Kompaktachse, z. B. eine servo-hydraulische Achse, mit entgastem Öl befüllt. Diese Maßnahme vermindert das Kompressionsvolumen (das heißt den "Schwund" des Öls, wenn das Öl in Subsea-Anwendungen durch einen Druckkompensator mit Umgebungsdruck beaufschlagt wird) und führt zu kleineren Kompensatoren und zu einem kleineren für die Kompression vorzuhaltenden Ölvolumen. Ganz allgemein vermindert der geringere Anteil an gelöstem Sauerstoff die Oxidation des Öls und der hydraulischen Komponente, es tritt seltener eine Kavitation auf oder ein Dieseleffekt, bei dem sich in einer Luftblase gelöster Öldampf entzündet. Insgesamt sinkt dadurch die Notwendigkeit einer Wartung oder eines Ölaustauschs in dicht abgeschlossenen hydraulischen Systemen deutlich.

Für die Befüllung von geschlossenen Systemen bei Unterwasser- Hydrauliksystemen ist das Kompressionsmodul des Betriebsmediums entscheidend für die Größe des Druckausgleichssystems. Bei einem entgasten Betriebsmedium lässt sich mit besonderem Vorteil das Kompressionsmodul des Betriebsmediums in Summe erhöhen, so dass eine kleinere Auslegung des Druckausgleichssystems möglich ist. Gleichzeitig reduziert sich die Oxidationsneigung, Kavitationsneigung und die Gefahr von Dieseleffekten verringert sich. Weiterhin ist eine bessere Regelung möglich, da sich das höhere und nahezu lineare Kompressionsmodul der Ölsäule positiv auf das Regelverhalten auswirkt.

Ein restlicher Gasgehalt des entgasten Hydraulikfluids beträgt dabei höchstens 10 % . Das bedeutet mit anderen Worten, dass ein Gas- oder Luftanteil im Hydraulikfluid auf maximal 10 % begrenzt wird.

Bei einer dynamischen hydraulisch betätigbaren Achse kann ein restlicher Gasgehalt des entgasten Hydraulikfluids im Bereich von 7 % bis 9 % liegen. Bei einer dynamischen Achse werden häufige und/oder schnelle Bewegungen der Achse durchgeführt, beispielsweise mit einer Fluidsäulenbeschleunigung (insbesondere bei Öl) von mindestens 20 m/s² [Meter pro Quadratsekunde] und / oder einer Druckanstiegsgeschwindigkeit von mindestens 1.000 bar/s [bar pro Sekunde]. Der vorstehend angegebene Bereich ist bei dynamischen Achsen deshalb vorteilhaft, weil er zur Reduzierung von unerwünschten Kavitations- und/oder Erosionserscheinungen führt, z. B. im Bereich der Steuerungsmittel bzw. des Steuerblocks. Bei hoher Dynamik kann in dem Hydraulikfluid befindliches Wasser ausdampfen, welches ebenfalls zu unerwünschten Kavitations- und/oder Erosionserscheinungen führen kann, wobei der Effekt durch das entsprechend entgaste Hydraulikfluid teilweise gelindert werden kann.

Zweckmäßig liegt ein restlicher Gasgehalt des entgasten Hydraulikfluids bei einer statischen hydraulischen Achse im Bereich von 2 % bis 5 %. Bei einer statischen Achse werden seltene und/oder langsame Bewegungen der Achse durchgeführt, beispielsweise mit einer Fluidsäulenbeschleunigung (insbesondere bei Öl) kleiner 20 m/s² [Meter pro Quadratsekunde] und / oder einer Druckanstiegsgeschwindigkeit kleiner 1.000 bar/s [bar pro Sekunde]. Da hier kein Verdampfen von Wasser zu erwarten ist, kann der Luftanteil weiter bzw. maximal reduziert werden, so dass die vorstehenden Eigenschaften der geringen Oxidationsfähigkeit (Alterung) und/oder Kompressibilität weiter ausgeschöpft werden können.

Gemäß einem weiteren Aspekt erfolgt die Verwendung von entgastem Öl als Hydraulikfluid für ein elektrohydraulisches System mit einem hydraulischen Verbraucher und einem abgeschlossenen Hydraulikkreislauf, wobei der Hydraulikkreislauf mindestens ein Steuerungsmittel, eine Hydromaschine und ein abgeschlossenes Hydraulikreservoir umfasst. Dabei handelt es sich bei dem elektrohydraulischen System um eines zum Betrieb unter Wasser bei äußeren Umgebungsdrücken oberhalb 100 bar oder sogar oberhalb 250 bar. Bei einer Anordnung unter Wasser und zur Steuerung eines förderbaren Volumenstroms eines gasförmigen oder flüssigen Mediums ist bevorzugt ein Prozessventil vorhanden. Das Prozessventil kann linear oder rotatorisch verstellt werden. Hierzu kann ein Hydrozylinder oder ein rotatorischer Hydromotor verwendet werden.

Nach einem noch weiteren Aspekt wird ein Verfahren zum Einrichten eines elektrohydraulischen Systems mit einem hydraulischen Verbraucher und einem abgeschlossenen Hydraulikkreislauf vorgeschlagen, wobei der Hydraulikkreislauf mindestens ein Steuerungsmittel, eine Hydromaschine und ein abgeschlossenes Hydraulikreservoir umfasst, aufweisend zumindest die folgenden Schritte:
a) Evakuieren des Hydraulikkreislaufs,
b) Befüllen des abgeschlossenen Hydraulikkreislaufs mit entgastem Hydraulikfluid.

Vor der Erstbefüllung oder Wiederbefüllung des Hydraulikkreislaufs kann gemäß Schritt a) mittels einer Vakuumierungsanordnung (z. B. einer Vakuumpumpe) der geschlossene Teil des Hydrauliksystems evakuiert werden, so dass sich möglichst keine oder sehr wenig Luft im System befindet. Der so vorbereitete Hydraulikkreislauf wird gemäß Schritt b) beispielsweise mittels einer Rohr-/Schlauchverbindung von dem entgasten Hydraulikfluid befüllt, so dass die oben angegebenen Füllgrade erreicht werden können.

Das entgaste Hydraulikfluid kann in Schritt b) mittels Überdruck in den Hydraulikkreislauf eingeführt werden.

Bevorzugt wird in einem zusätzlichen Schritt c) das Hydraulikfluid entgast. In der Vorbereitung wird der Sauerstoffanteil bzw. Luftanteil im einzufüllenden Hydraulikfluid reduziert. Vorzugsweise wird ein Sauerstoffgehalt im Medium so weit reduziert, so dass sich kein freier Sauerstoff/Luft mehr im Medium befindet. Beispielsweise liegt dieser Punkt bei einem Mineralöl ISO VG46 bei ca. 8,5 bis 9 %, wobei je nach Anlagenausführung der Sauerstoffgehalt (restlicher Gasgehalt) vorzugsweise auch kleiner 8,5 % betragen kann.

Vorzugsweise ist für das Nachfüllen von Systemen ein restlicher Sauerstoffgehalt des Hydraulikfluids kleiner 8,5 % vorteilhaft, was zum Beispiel einem Partialdruck kleiner 180 mbar in der Flüssigkeit entspricht.

Insbesondere ist der Schritt c) vor Schritt b) durchzuführen und kann zumindest zeitweise überlappend mit dem Schritt a) erfolgen. Insbesondere kann ggf. eine Vakuumierungsanordnung auf den Hydraulikkreislauf und/oder einen Hydraulikfluidspeicher einwirken. Der Hydraulikspeicher kann mit der Vakuumierungsanordnung so zusammenwirken, dass dieser einen Druck oberhalb des (zunächst nicht entgasten) Hydraulikfluids von beispielsweise absolut 0,2 bar einstellt. Dies führt zum Schäumen des Hydraulikfluids, was durch eine größere Blasenbildung der aufgenommenen Luft und dem Ausgasen nach oben bewirkt wird. Derart kann dem Hydraulikfluid diese aufgenommene Luft entzogen werden (Entgasung). Zur Unterstützung kann eine Umwälzpumpe vorgesehen sein, die das Hydraulikfluid in dem Hydraulikfluidspeicher unter Vakuum noch umwälzt, was zu einer verbesserten bzw. gleichmäßigeren Entgasung führt. Weiter kann dieser Umwälzvorgang auch genutzt werden, das Hydraulikfluid während der Entgasung zu filtern und/oder zu reinigen.

Wenn das Hydraulikfluid entgast ist und der Hydraulikkreislauf vakuumiert ist, kann z. B. das Vakuum in dem Hydraulikfluidspeicher reduziert werden (auf Atmosphärendruck oder darüber), wodurch das entgaste Hydraulikfluid unterstützt von dem noch anliegenden Vakuum in dem Hydraulikkreislauf schnell eingesogen werden kann und den Hydraulikkreislauf (soweit wie möglich) vollständig ausfüllen kann.

Weiter wird eine Apparatur zum Einrichten eines vier vorgeschlagenen elektrohydraulischen Systems vorgeschlagen, welches mit einem hydraulischen Verbraucher und einem abgeschlossenen Hydraulikkreislauf ausgeführt ist, wobei der Hydraulikkreislauf mindestens ein Steuerungsmittel, eine Hydromaschine und ein abgeschlossenes Hydraulikreservoir umfasst. Die Apparatur weist zumindest Folgendes auf:
- einen Fluideinlass an dem Hydraulikreservoir,
- eine Vakuumierungsanordnung, die auf den Hydraulikkreislauf einwirken kann,
- eine Einrichtung zur Bereitstellung von entgastem Hydraulikfluid, die zumindest eine Vakuumierungsanordnung, die auf einen separaten Hydraulikfluidspeicher einwirken kann, und einen Fluidauslass für entgastes Hydraulikfluid aus dem Hydraulikfluidspeicher umfasst.

Die Apparatur kann insbesondere so ausgeführt sein, dass die Einrichtung zur Bereitstellung von entgastem Hydraulikfluid zeitweise mit dem elektrohydraulischen System koppelbar ist, insbesondere über den Fluideinlass bzw. Fluidauslass und/oder einen Anschluss der Vakuumierungsanordnung. Die Einrichtung zur Bereitstellung von entgastem Hydraulikfluid ist insbesondere mobil bzw. separat beweglich und kann an unterschiedliche elektrohydraulische Systeme angeschlossen werden. Das Einrichten eines elektrohydraulischen Systems umfasst hier insbesondere das Befüllen des Hydraulikkreislaufs mit einem Betriebsmittel, nämlich dem entgasten Hydraulikfluid bzw. entgasten Öl.

Der separate Hydraulikfluidspeicher kann nach Art eines Tanks ausgeführt sein, in dem das Hydraulikfluid bevorratet wird, beispielsweise auch zumindest teilweise unter Atmosphärendruck. Vor dem Füllvorgang kann dort mittels der Vakuumierungsanordnung ein Unterdruck bzw. Vakuum (ca. 0,2 bar) angelegt werden, so dass das bevorratete Hydraulikfluid entgast wird. Ist der gewünschte Entgasungszustand erreicht, kann das entgaste Hydraulikfluid von dem Fluidauslass des Hydraulikfluidspeichers über den Fluideinlass an dem Hydraulikreservoir in den Hydraulikkreislauf überführt werden. Dies kann dadurch erreicht werden, dass nach dem Verbinden von Fluidauslass und Fluideinlass das Vakuum im Hydraulikfluidspeicher reduziert bzw. aufgehoben wird.

Es ist möglich, dass die Vakuumierungsanordnung der Einrichtung zur Bereitstellung von entgastem Hydraulikfluid auch mit dem Hydraulikkreislauf koppelbar ist. So kann die Vakuumierungsanordnung auch zur Evakuierung des Hydraulikkreislauf verwendet bzw. eingesetzt werden.

Die Einrichtung zur Bereitstellung von entgastem Hydraulikfluid kann mit einer Umwälzpumpe für den separaten Hydraulikfluidspeicher ausgeführt sein, die eine Kreisförderung des Hydraulikfluids, ggf. durch mindestens einen Filter, realisieren kann.

Die Erläuterungen zum elektrohydraulischen System, zur Verwendung von entgastem Öl als Hydraulikfluid, zum Verfahren zum Einrichten eines elektrohydraulischen Systems sowie zur Apparatur zum Einrichten eines elektrohydraulischen Systems können wechselseitig zur weiteren Charakterisierung herangezogen werden.

Die Erfindung und das technische Umfeld werden nachfolgend anhand von Figuren näher erläutert. Dabei sind gleiche Bauteile mit gleichen Bezugszeichen gekennzeichnet. Die Darstellungen sind schematisch und nicht zur Veranschaulichung von Größenverhältnissen vorgesehen. Die mit Bezug auf einzelne Details einer Figur angeführten Erläuterungen sind extrahierbar und mit Sachverhalten aus anderen Figuren oder der vorstehenden Beschreibung frei kombinierbar, es sei denn, dass sich für einen Fachmann zwingend etwas anderes ergibt bzw. eine solche Kombination hier explizit untersagt wird. Es zeigen schematisch:
Fig. 1: eine Seitenansicht des elektrohydraulischen Systems mit einer hydraulischen Achse und einem abgeschlossenen Hydraulikkreislauf bei geschlossenem Prozessventil;
Fig. 2: ein Blockschaltbild mit einer Vorrichtung zum Evakuieren und Befüllen eines geschlossenen Hydraulikkreislaufs mit entgastem Hydraulikfluid sowie Flussrichtungen von Fluiden;
Fig. 3: einen Schaltplan einer hydraulischen Achse mit einer hydraulischen Schaltung für einen geschlossenen Hydraulikkreislauf und
Fig. 4a, 4b: in Vorderansicht (Fig. 4a) und in Seitenansicht (Fig. 4b) eine Vorrichtung zum Entgasen eines Hydraulikfluids und zum Befüllen eines geschlossenen Hydraulikkreislaufs.

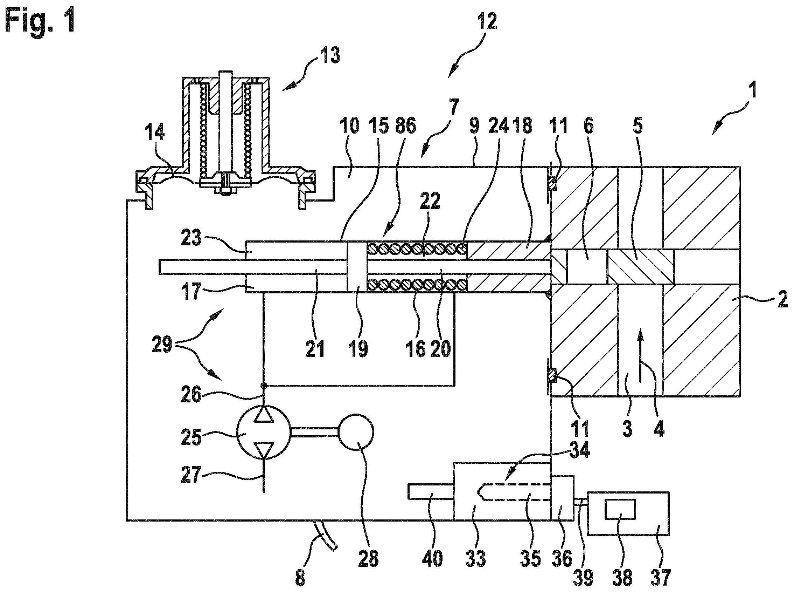

In Fig. 1 ist ein elektrohydraulisches System 7 mit einer hydraulischen Achse als hydraulischen Verbraucher und einem geschlossenen Hydraulikkreislauf bei geschlossenem Prozessventil 1 dargestellt.

Die Fig. 1 zeigt einen elektrohydraulischen Stellantrieb 29 für ein Prozessventil 1 mit einem Prozessventilgehäuse 2, durch das ein Prozessventilkanal 3 hindurchfährt, der an seinen Mündungen durch nicht dargestellte Rohre fortgeführt wird und in dem ein gasförmiges oder flüssiges Medium vom Meeresboden zu einem aus dem Meer herausragenden Teil eines Bohrturms oder zu einem Bohrschiff fließt. Die Flussrichtung sei durch den Pfeil 4 angegeben.

In dem Prozessventilgehäuse 2 ist ein Hohlraum ausgebildet, der den Prozessventilkanal 3 quert und in dem ein Prozessventilschieber 5 mit einer Durchflussöffnung 6 quer zur Längsrichtung des Prozessventilkanals 3 bewegbar ist. In dem Zustand nach der Fig. 1 überdecken sich der Prozessventilkanal 3 und die Durchflussöffnung 6 im Prozessventilschieber 5 nicht. Das Prozessventil 1 ist also geschlossen. In einem (nicht dargestellten) Zustand überdecken sich die Durchflussöffnung 6 und der Prozessventilkanal 3 weitgehend. Das Prozessventil 1 ist fast geschlossen.

Ein Prozessventil 1 der gezeigten Art und der beschriebenen Verwendung soll einerseits kontrolliert betätigt werden können und andererseits auch zur Sicherheit beitragen, indem es bei einer Störung schnell und zuverlässig eine Stellung einnimmt, die einem sicheren Zustand entspricht. Vorliegend ist dieser sichere Zustand ein geschlossenes Prozessventil 1.

Das Prozessventil 1 wird durch ein kompaktes elektrohydraulisches System 7 betätigt, das unter Wasser direkt am Prozessventil 1 angeordnet ist. Das hydraulische System 7 weist einen Behälter 9 auf, der an einer offenen Seite am Prozessventil 1 befestigt ist, so dass ein zur Umgebung abgeschlossener Innenraum 10 vorhanden ist, der mit einem hydraulischen Druckfluid, z. B. Öl, als Arbeitsmittel gefüllt ist. Zur Befestigung an dem Prozessventilgehäuse 2 besitzt der Behälter 9 an seiner offenen Seite einen Innenflansch, mit dem er am Prozessventilgehäuse 2 verschraubt ist. Radial außerhalb der Schraubverbindungen ist zwischen dem Innenflansch des Behälters 9 und dem Prozessventilgehäuse 2 eine umlaufende Dichtung 11 angeordnet, die in eine umlaufende Nut des Prozessventilgehäuses 2 eingelegt ist.

Der Behälter 9 ist gegenüber dem unter Wasser herrschenden Umgebungsdruck (Seewasserbereich 12) druckkompensiert. Dazu ist bei einem Druckkompensator 13 in einer Öffnung in der Behälterwand eine Membran 14 dicht eingeklemmt. Durch die Membran 14 ist also der Innenraum 10 gegen die Umgebung abgeschottet. Aus dem Behälter 9 ist ein Kabel 8 herausgeführt.

Im Innenraum 10 des Behälters 9 ist ein Hydrozylinder 15 (als hydraulischer Verbraucher bzw. Stell-Achse) mit einem Zylindergehäuse 16 vorhanden, das stirnseitig durch einen Zylinderboden 17 und einen Zylinderkopf 18 verschlossen ist, mit einem im Inneren des Zylindergehäuses 16 in Längsrichtung des Zylindergehäuses 16 verschiebbaren Kolben 19 und mit einer mit dem Kolben 19 fest verbundenen und einseitig von dem Kolben 19 weg ragenden ersten Kolbenstange 20, die abgedichtet und in nicht näher dargestellter Weise geführt durch den Zylinderkopf 18 hindurchtritt. Abgedichtet ist der Spalt zwischen der Kolbenstange 20 und dem Zylinderkopf 18 durch zwei (nicht dargestellte) im Zylinderkopf 18 in einem axialen Abstand zueinander angeordnete Dichtungen. Am freien Ende der Kolbenstange 20 ist der Prozessventilscheiber 5 befestigt. Weiterhin ist eine mit dem Kolben 19 fest verbundene und zur anderen Seite von dem Kolben 19 weg ragende zweite Kolbenstange 21 vorhanden, die abgedichtet geführt und durch den Zylinderboden 17 hindurchtritt. Durch den Kolben 19 ist das Innere des Zylindergehäuses 16 in eine zylinderkopfseitige erste Zylinderkammer 22 und in eine bodenseitige zweite Zylinderkammer 23 unterteilt, deren Volumen von der Position des Kolbens 19 abhängt.

In der Zylinderkammer 22 ist eine Schraubendruckfeder 24 untergebracht, die die Kolbenstange 20 umgibt und zwischen dem Zylinderkopf 18 und dem Kolben 19 eingespannt ist, den Kolben 19 in einer Richtung beaufschlagt, in die die Kolbenstange 20 eingefahren und der Ventilschieber 5 zum Schließen des Prozessventils 1 bewegt wird.

Im Innenraum 10 des Behälters 9 befindet sich auch eine Hydromaschine 25, die als Pumpe mit zwei Förderrichtungen betreibbar ist. Die Hydromaschine 25 hat einen Druckanschluss 26 und einen Sauganschluss 27, der zum Innenraum 10 offen ist. Von der Hydromaschine 25 kann im Betrieb als Pumpe aus dem Innenraum 10 angesaugtes Hydraulikfluid über den Druckanschluss 26 zu der Zylinderkammer 23 gefördert werden. Umgekehrt kann Hydraulikfluid aus der Zylinderkammer 23 über die Hydromaschine 25 in den Innenraum 10 des Behälters 9 verdrängt werden. Mit der Hydromaschine 25 ist eine Elektromaschine 28 für eine gemeinsame drehende Bewegung mechanisch gekoppelt, z. B. über eine Welle.

Weiterhin ist eine hydraulische Kupplung vorhanden, mit der unter Wasser entgastes Hydraulikfluid bzw. Öl von einem ersten System (z. B. Speicher oder Nachfüllstation, oder Notbetätigungs-Roboter) in ein zweites System (geschlossener Hydraulikkreislauf) eingebracht werden kann, ohne dass eine Kontamination mit Seewasser stattfindet.

Die hydraulische Kupplung umfasst einen Block 33 und einen Einfüllstab 34 (Hot Stab). Der Block 33 ist im Innenraum 10 des Behälters 9 angeordnet, während sich im gezeigten Beispiel ein stabförmiges Einfüllteil 35 innerhalb des Blocks 33 und ein Anschlussteil 36 außerhalb des Blocks 33 befinden. An dem Anschlussteil 33 ist ein ferngesteuertes Unterwasserfahrzeug 37 angeschlossen, das als Hydraulikreservoir einen Speicherbehälter 38 für entgastes Hydraulikfluid bzw. Öl umfasst. Mit 39 ist eine Regeleinrichtung für den Ölfluss vom Unterwasserfahrzeug 37 zur Kupplung bezeichnet. Die Regeleinrichtung 39 umfasst oder steht in einer Verbindung mit einer Ein- und Ausschaltvorrichtung für den Strom des entgasten Fluids aus dem Speicherbehälter 38. Mit 40 ist ein Ausgangsbereich bezeichnet.

Das Unterwasserfahrzeug 37 kann als ein Remote Operated Vehicle (ROV), Autonomous Underwater Vehicle (AUV) oder Subsea Crawler (z. B. Bergbau oder Kabelverlegung) ausgebildet sein.

Eine (hydraulische) Anordnung der hier vorgestellten Art kann in einer neuen (hydraulischen) Vorrichtung verbaut oder in einer vorhandenen (hydraulischen) Vorrichtung nachgerüstet werden.

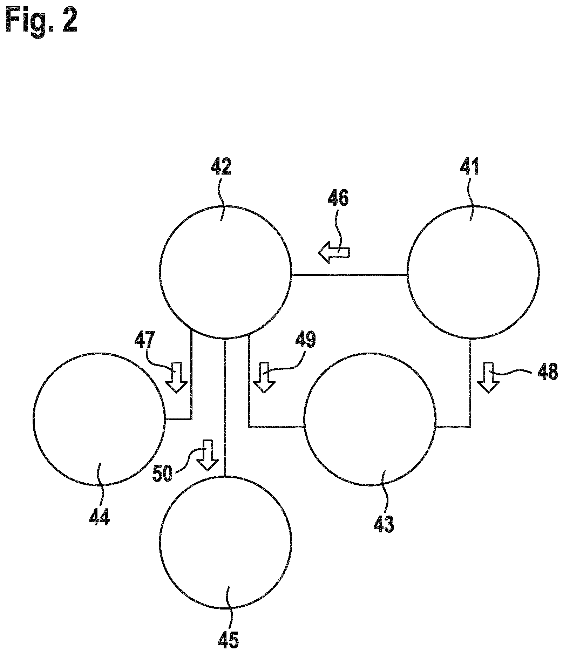

Fig. 2 zeigt ein Blockschaltbild mit einer Apparatur zum Einrichten eines elektrohydraulischen Systems. Eine Einrichtung 41 zur Bereitstellung von entgastem Hydraulikfluid steht mit einer Vakuumpumpe bzw. Vakuumierungsanordnung 43 in Verbindung, die der Entgasung des Hydraulikfluids dient. Zudem ist der Hydraulikkreislauf 42 optional an dieselbe Vakuumpumpe bzw. Vakuumierungsanordnung 43 angeschlossen, die der Evakuierung des Hydraulikkreislaufs 42 dienen kann. Es können auch (nicht dargestellt) zwei gesonderte Vakuumpumpen jeweils an die Einrichtung 41 und an den geschlossenen Hydraulikkreislauf 42 angeschlossen sein. Weiterhin ist an den Hydraulikkreislauf 42 eine Entleerungseinrichtung 44 angeschlossen, die zur Entleerung von verbrauchtem Öl herangezogen wird. Zudem kann an den Hydraulikkreislauf 42 eine Entlüftungseinrichtung 45 angeschlossen sein. Die Pfeile 46 und 47 bezeichnen jeweils einen Hydraulikfluidstrom und die Pfeile 48, 49, 50 bezeichnen jeweils einen Luftstrom. Die Pfeilspitzen geben jeweils die Stromrichtung an.

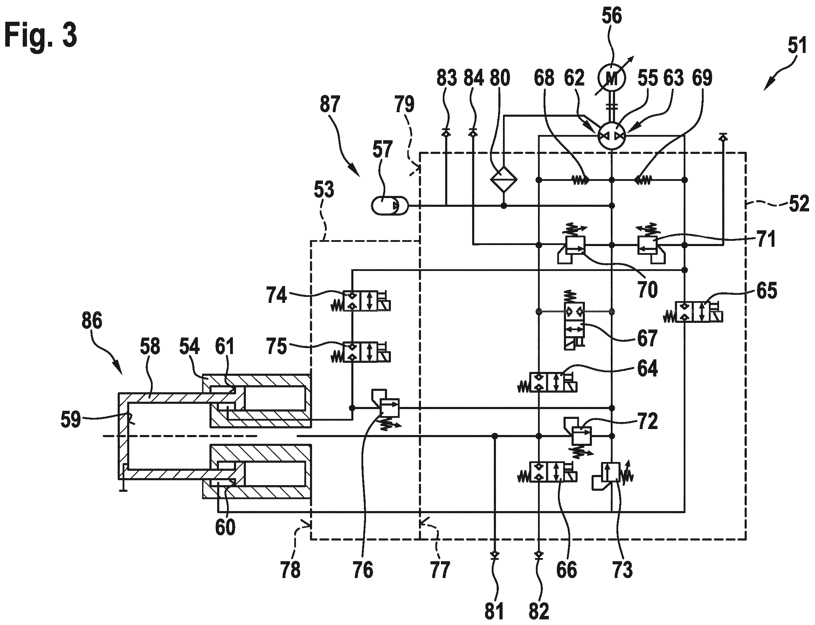

Fig. 3 zeigt einen Schaltplan einer hydraulischen Achse 51 mit einer hydraulischen Schaltung für einen geschlossenen Hydraulikkreislauf. In Fig. 3 ist eine Kompaktachse dargestellt. Bei dieser sind eine hydraulische Pumpe, ein Elektromotor und ein Mehrflächenzylinder zu einer Baueinheit zusammengefügt. Zum Steuern des Mehrflächenzylinders sind im Steuerblock mehrere Steuerventile vorgesehen.

Die hydraulische Achse 51 (servo-hydraulische Kompaktachse) hat einen Steuerblock 52, an den über einen Zwischenblock 53 ein Hydrozylinder 54 angeschlossen ist. An den Steuerblock 52 ist des Weiteren eine Hydromaschine 55 angeschlossen, die als Hydropumpe und Hydromotor in beiden Richtungen einsetzbar ist. Die Hydromaschine 55 ist über einen Antrieb in Form eines Elektromotors 56 antreibbar. Des Weiteren ist ein Hydrospeicher 57 an den Steuerblock 52 angeschlossen.

Beim dem Hydrozylinder 54 handelt es sich um einen Mehrflächenzylinder, dessen Kolben 58 eine Ausfahrfläche 59, eine erste Einfahrfläche 60 und eine zweite Einfahrfläche 61 aufweist. Über den Steuerblock 52 und den Zwischenblock 53 kann der Kolben 58 in einem Eilgang und in einem Kraftgang aus- und eingefahren werden. Des Weiteren kann eine Dekompression nach dem Kraftgang in Ausfahr- und Einfahrrichtung erfolgen. Des Weiteren kann der Kolben 48 in einer Druckhaltephase eingespannt sein. Außerdem kann ein Speicherlademodus vorgesehen sein.

Die Hydromaschine 55 ist über einen ersten Pumpenanschluss 62 und einen zweiten Pumpenanschluss 61 an den Steuerblock 2 angeschlossen. Der erste Pumpenanschluss 62 ist über ein erstes Steuerventil 64 des Steuerblocks 52 mit der Ausfahrfläche 59 fluidisch verbindbar. Das erste Steuerventil 64 ist als Schaltventil ausgestaltet, wobei dessen Ventilschieber in seiner Schließposition über eine Ventilfeder mit einer Federkraft beaufschlagt ist und über einen elektromagnetischen Aktor oder manuell in seine Öffnungsposition bringbar ist. Über ein zweites Steuerventil 65, das entsprechend dem ersten Steuerventil 64 ausgestaltet ist, ist der zweite Pumpenanschluss 63 mit der zweiten Einfahrfläche 61 fluidisch verbindbar. Über ein drittes Steuerventil 66, das entsprechend den Steuerventilen 64 und 65 ausgestaltet ist, ist die Ausfahrfläche 59 mit der ersten Einfahrfläche 60 fluidisch verbindbar. Ein Strömungspfad zwischen dem ersten Pumpenanschluss 62 und dem ersten Steuerventil 64 ist über ein viertes Steuerventil 64 mit dem Hydrospeicher 57 fluidisch verbindbar. Ferner ist der Hydrospeicher 57 über ein erstes Rückschlagventil 60 mit dem ersten Pumpenanschluss 62 und über ein zweites Rückschlagventil 69 mit dem zweiten Pumpenanschluss 63 verbindbar. Die Rückschlagventile 68, 69 öffnen hierbei jeweils in einer Strömungsrichtung weg vom Hydrospeicher 57. Des Weiteren ist der erste Pumpenanschluss 62 über ein Druckbegrenzungsventil 70 und der zweite Pumpenanschluss 63 über ein Druckbegrenzungsventil 71 mit dem Hydrospeicher 57 verbindbar. Außerdem ist die Ausfahrfläche 59 ebenfalls über ein Druckbegrenzungsventil 72 und die zweite Einfahrfläche 61 über ein Druckbegrenzungsventil 73 mit dem Hydrospeicher 57 fluidisch verbindbar. In dem Zwischenblock 53 sind zwei Schaltwegventile 74, 75 in Reihe angeordnet. Diese sind hierbei entsprechend den Steuerventilen 64 bis 67 ausgebildet. Über die Schaltwegventile 74, 75 ist eine Druckmittelverbindung zwischen dem zweiten Pumpenanschluss 63 und der ersten Einfahrfläche 60 auf- und zusteuerbar. Die Druckmittelverbindung ist hierbei aufgesteuert, wenn beide Schaltwegventile 74, 75 in ihrer Öffnungsstellung geschaltet sind. Ist der Hydrozylinder 54 hängend angeordnet, so kann über die Schaltwegventile 74, 75 der Kolben 58 im geschlossenen Zustand der Schaltwegventile 74, 75 hochgehalten werden. Somit dienen diese als Hochhalteventile zum Absichern einer von der ersten Einfahrfläche 60 begrenzten Ringkammer des Hydrozylinders 54, der als Pressenzylinder einsetzbar ist. Das zweite Schaltwegventil 75 ist zwischen dem Schaltwegventil 74 und dem Hydrozylinder 54 angeordnet. Wiederum zwischen der ersten Einfahrfläche 60 und dem zweiten Schaltwegventil 75 ist ein Druckbegrenzungsventil 76 angeschlossen. Dieses ist im Zwischenblock 53 angeordnet und über den Steuerblock 52 mit dem Hydrospeicher 57 verbunden.

Der Zwischenblock 53 weist des Weiteren eine erste Anschlussfläche 77 und eine zweite Anschlussfläche 78 auf. Die erste Anschlussfläche 77 ist hierbei an eine Anschlussfläche 79 oder Abschlussfläche des Steuerblocks 52 angeschlossen. An die zweite Anschlussfläche 78 wiederum ist der Hydrozylinder 54 angeschlossen. Die Anschlussflächen 77, 78 und 79 weisen hierbei ein gleiches Lochbild auf. Somit könnte der Hydrozylinder 54 auch ohne Zwischenblock 53 direkt an den Steuerblock 52 angeschlossen werden.

Mit 80 ist ein Filter und mit 81 bis 84 sind Rückschlagventile (ohne Druckabfall) bezeichnet.

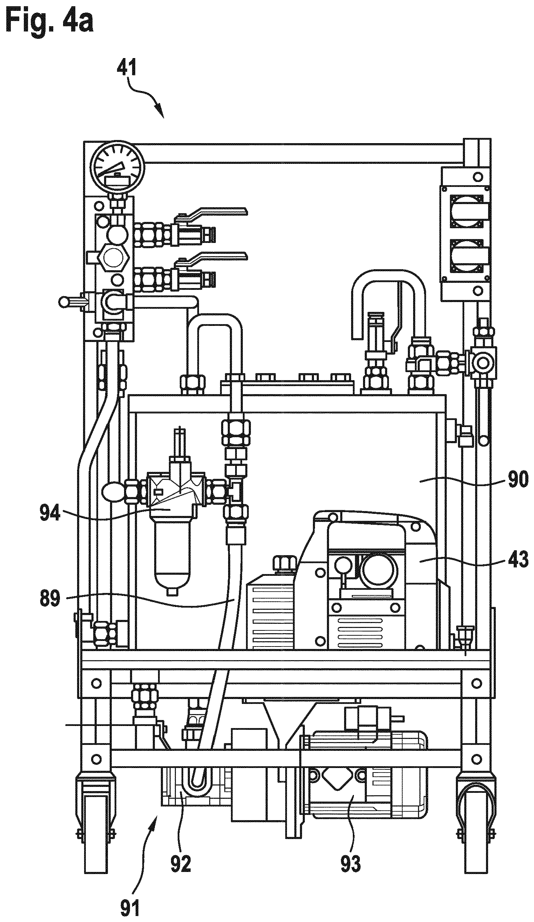

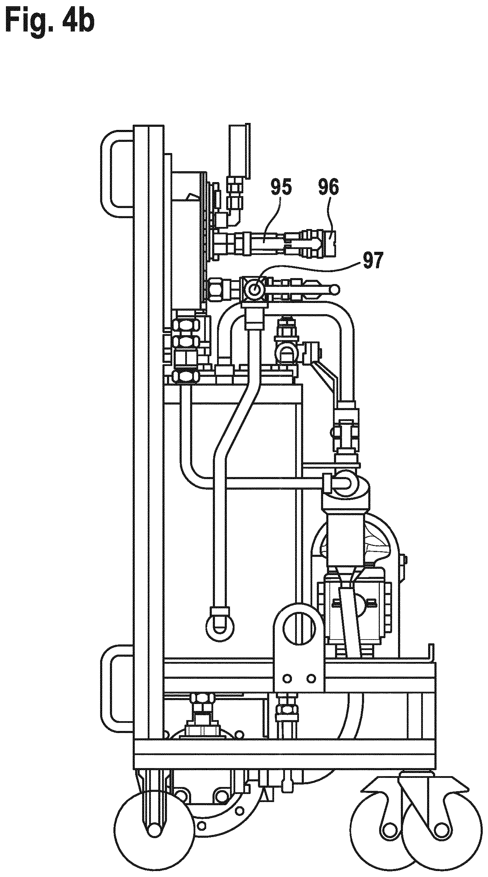

Die Fig. 4a, 4b zeigen schematisch in Vorderansicht (Fig. 4a) und in Seitenansicht (Fig. 4b) eine Einrichtung 41 zur Bereitstellung von entgastem Hydraulikfluid und zum Befüllen eines geschlossenen Hydraulikkreislaufs 42 (siehe Fig. 2) mit dem entgasten Hydraulikfluid.

Mit der Einrichtung 41 kann das für die Befüllung eines hydraulischen Systems benötigte entgaste Öl für die Verwendung vorbereitet werden. Die Evakuierung der hydraulischen Bohrungen im Steuerblock, der Innenräume der Aufbauten und dem Zylinder (elektrohydraulisches System) ist mit der Einrichtung 41 möglich. Danach ist eine Befüllung mit dem aufbereiteten Hydraulikfluid möglich. Wird die Einrichtung 41 mit nicht dargestellten druckfesten Hydraulikschläuchen 88 mit einem hydraulischen System verbunden, kann dieses gespült und das Hydraulikfluid im Nebenstrom evakuiert und filtriert werden.

Der Volumenstrom der verbauten Pumpe (Filterpumpe 92) beträgt maximal 7,5 l/min. Die Betriebstemperatur liegt im Bereich von +10 °C bis 60 °C. Geeignet sind Druckflüssigkeiten mit einer Viskosität von 10 bis 300 m²/s.

Die Einrichtung 41 besteht aus einem Behälter bzw. separaten Hydraulikfluidspeicher 90 (Ölbehälter), der vakuumdicht und druckdicht ausgeführt ist. Am unteren Teil des Hydraulikfluidspeichers 90 ist eine Filterpumpeneinheit (bzw. Umwälzpumpe) 91 montiert und mit einem Bypassrohr 89 von 3 bar zum Hydraulikfluidspeicher 90 (Tank) verrohrt. Die Filterpumpeneinheit 91 besteht aus einer elektrisch betriebenen Filterpumpe 92, z. B. Innenzahnradpumpe mit wechselbarem Niederdruckfilter, der mit einer optischen Wartungsanzeige überwacht wird. Mit 93 ist ein Elektromotor (Motor "Hauptpumpe") und mit 94 ist ein Leitungsfilter bezeichnet.

Ein Niederdruckverteilerblock ist mit der Filterpumpeneinheit 91 und dem oberen Teil des Hydraulikfluidspeichers 90 verrohrt. Der Verteilerblock trägt mit Kugelhähnen 95 zuschaltbare Niederdrucksteckanschlüsse (z. B. zur Befüllung eines hydraulischen Systems) und eine leckagefreie Hydraulik-Schnellschlusskupplung zum Nachspeisen. Ein fahrbares Gestell trägt den Hydraulikfluidspeicher 90 mit der Filterpumpeneinheit 91 und dem Verteilerblock sowie eine Vakuumpumpe bzw. Vakuumierungsanordnung 43. Diese Vakuumierungsanordnung 43 ist mittels Niederdruckschlauch über einen Ölabscheider mit dem oberen Teil des Hydraulikfluidspeichers 90 verbunden. Mit einem 3/2-Funktionskugelhahn 97 (3-Wege-Kugelhahn) kann der Hydraulikfluidspeicher 90 mit der Atmosphäre bzw. mit der Vakuumpumpe bzw. Vakuumierungsanordnung 43 verbunden werden. Die Druckschläuche sind jeweils am Ende mit einer Hydraulik-Schnellschlusskupplung bestückt. Mit 96 ist eine Kupplungsmuffe (hydraulische Befüllung) bezeichnet.

Die Hydromaschine 25; 55 ist in Fig. 1 als Hydropumpe mit zwei Förderrichtungen und in Fig. 3 als Hydropumpe und/oder Hydromotor dargestellt. Der hydraulische Verbraucher 86 ist in Fig. 1 als doppelt wirkender Hydrozylinder 15 mit zweiseitiger Kolbenstange und in Fig. 3 als Mehrflächenzylinder dargestellt. Das Hydraulikreservoir 87 ist in Fig. 1 als Behälter 9 und in Fig. 3 als Hydrospeicher 57 dargestellt.

## Patentansprüche

1. Elektrohydraulisches System (7) mit einem gegenüber einem unter Wasser herrschenden Umgebungsdruck oberhalb 100 bar druckkompensierbaren Behälter (9), welcher einen Druckkompensator (13) mit einer in einer Öffnung einer Behälterwand dicht eingeklemmten Membran (14) hat, die den Innenraum (10) des Behälters (9) gegen die Umgebung abschottet, wobei das elektrohydraulische System (7) mit einem hydraulischen Verbraucher (86) und mindestens einem abgeschlossenen Hydraulikkreislauf (42) ausgeführt ist, wobei der Hydraulikkreislauf (42) mindestens ein Steuerungsmittel, eine Hydromaschine (25; 55) und ein abgeschlossenes Hydraulikreservoir umfasst, **dadurch gekennzeichnet, dass** der abgeschlossene Hydraulikkreislauf (42) mit entgastem Hydraulikfluid befüllt ist, dessen restlicher Gasgehalt höchstens 10 % beträgt.

2. Elektrohydraulisches System (7) nach Patentanspruch 1, wobei die Hydromaschine (25; 55) über einen Anschluss im Innenraum (10) des Behälters (9) Hydraulikfluid für den Hydraulikkreislauf (42) ansaugt oder Hydraulikfluid aus den Hydraulikkreislauf (42) verdrängt.

3. Elektrohydraulisches System (7) nach Patentanspruch 1 oder 2, wobei der hydraulische Verbraucher (86) eine dynamisch betätigbare Achse (51) umfasst und ein restlicher Gasgehalt des entgasten Hydraulikfluids im Bereich von 7 % bis 9 % liegt.

4. Elektrohydraulisches System (7) nach Patentanspruch 1 oder 2, wobei der hydraulische Verbraucher (86) eine statisch betätigbare Achse (51) umfasst und ein restlicher Gasgehalt des entgasten Hydraulikfluids im Bereich von 2 % bis 5 % liegt.

5. Verwendung von entgastem Öl als Hydraulikfluid für ein elektrohydraulisches System (7) mit einem hydraulischen Verbraucher (86) und einem abgeschlossenen Hydraulikkreislauf (42), wobei der Hydraulikkreislauf (42) mindestens ein Steuerungsmittel, eine Hydromaschine (25; 55) und ein abgeschlossenes Hydraulikreservoir (87) umfasst, zur Verminderung des Kompressionsvolumens des Öls, wenn dieses in einer Unterwasser-Anwendung durch einen Druckkompensator mit Umgebungsdruck oberhalb 100 bar beaufschlagt wird.

6. Verwendung nach Patentanspruch 5 zur Verlängerung der Betriebsdauer der Membran eines Druckkompensators unter Wasser.

7. Verfahren zum Einrichten eines elektrohydraulischen Systems (7) nach Anspruch 1 aufweisend zumindest die folgenden Schritte:
a) Evakuieren des Hydraulikkreislaufs (42),
b) Befüllen des abgeschlossenen Hydraulikkreislaufs (42) mit entgastem Hydraulikfluid.

8. Verfahren nach Patentanspruch 7, wobei das entgaste Hydraulikfluid in Schritt b) mittels Überdruck in den Hydraulikkreislaufs (42) eingeführt wird.

## Claims

1. Electrohydraulic system (7) having a container (9) which can be pressure-compensated with respect to an ambient pressure prevailing under water of above 100 bar and has a pressure compensator (13) with a membrane (14) which is tightly clamped in an opening in a container wall and partitions off the interior (10) of the container (9) from the environment, wherein the electrohydraulic system (7) is designed with a hydraulic consumer (86) and at least one closed hydraulic circuit (42), wherein the hydraulic circuit (42) comprises at least a control means, a hydraulic machine (25; 55) and a closed hydraulic reservoir, **characterized in that** the closed hydraulic circuit (42) is filled with degassed hydraulic fluid, the residual gas content of which is 10% at most.

2. Electrohydraulic system (7) according to Claim 1, wherein the hydraulic machine (25; 55) draws hydraulic fluid for the hydraulic circuit (42) or displaces hydraulic fluid from the hydraulic circuit (42) via a connection in the interior (10) of the container (9).

3. Electrohydraulic system (7) according to Claim 1 or 2, wherein the hydraulic consumer (86) comprises a dynamically actuable axle (51) and a residual gas content of the degassed hydraulic fluid lies in the range of 7% to 9%.

4. Electrohydraulic system (7) according to Claim 1 or 2, wherein the hydraulic consumer (86) comprises a statically actuable axle (51) and a residual gas content of the degassed hydraulic fluid lies in the range of 2% to 5%.

5. Use of degassed oil as a hydraulic fluid for an electrohydraulic system (7) having a hydraulic consumer (86) and a closed hydraulic circuit (42), wherein the hydraulic circuit (42) comprises at least a control means, a hydraulic machine (25; 55) and a closed hydraulic reservoir (87), for reducing the compression volume of the oil when ambient pressure above 100 bar is applied to the oil by a pressure compensator in an underwater application.

6. Use according to Claim 5 for extending the service life of the membrane of a pressure compensator under water.

7. Method for setting up an electrohydraulic system (7) according to Claim 1 comprising at least the following steps:
a) evacuating the hydraulic circuit (42),
b) filling the closed hydraulic circuit (42) with degassed hydraulic fluid.

8. Method according to Claim 7, wherein the degassed hydraulic fluid is introduced into the hydraulic circuit (42) by means of excess pressure in step b).

## Revendications

1. Système électrohydraulique (7) avec un contenant (9) à pression pouvant être compensée par rapport à une pression ambiante supérieure à 100 bar régnant sous l'eau, lequel comporte un compensateur de pression (13) avec une membrane (14) coincée de manière étanche dans une ouverture d'une paroi de contenant, laquelle isole l'espace intérieur (10) du contenant (9) de l'environnement, le système électrohydraulique (7) étant conçu avec un consommateur hydraulique (86) et au moins un circuit hydraulique (42) fermé, le circuit hydraulique (42) comprenant au moins un moyen de commande, une machine hydraulique (25 ; 55) et un réservoir hydraulique fermé, **caractérisé en ce que** le circuit hydraulique (42) fermé est rempli d'un fluide hydraulique dégazé dont la teneur en gaz résiduel est au maximum de 10 %.

2. Système électrohydraulique (7) selon la revendication 1, la machine hydraulique (25 ; 55) aspirant du fluide hydraulique pour le circuit hydraulique (42) ou refoulant du fluide hydraulique hors du circuit hydraulique (42) par un raccord dans l'espace intérieur (10) du contenant (9).

3. Système électrohydraulique (7) selon la revendication 1 ou 2, le consommateur hydraulique (86) comprenant un essieu (51) actionnable dynamiquement et une teneur en gaz résiduel du fluide hydraulique dégazé se situant dans la plage de 7 % à 9 %.

4. Système électrohydraulique (7) selon la revendication 1 ou 2, le consommateur hydraulique (86) comprenant un essieu (51) actionnable statiquement et une teneur en gaz résiduel du fluide hydraulique dégazé se situant dans la plage de 2 % à 5 %.

5. Utilisation d'huile dégazée comme fluide hydraulique pour un système électrohydraulique (7) avec un consommateur hydraulique (86) et un circuit hydraulique (42) fermé, le circuit hydraulique (42) comprenant au moins un moyen de commande, une machine hydraulique (25 ; 55) et un réservoir hydraulique (87) fermé, pour réduire le volume de compression de l'huile lorsque, dans une application sous-marine, l'huile est soumise à l'action d'une pression ambiante supérieure à 100 bar par un compensateur de pression.

6. Utilisation selon la revendication 5 pour prolonger la durée de vie de la membrane d'un compensateur de pression sous l'eau.

7. Procédé de mise au point d'un système électrohydraulique (7) selon la revendication 1, présentant au moins les étapes suivantes :
a) mise sous vide du circuit hydraulique (42),
b) remplissage du circuit hydraulique (42) fermé avec du fluide hydraulique dégazé.

8. Procédé selon la revendication 7, le fluide hydraulique dégazé étant introduit dans le circuit hydraulique (42) au moyen d'une surpression dans l'étape b).
